# EUROPEAN PATENT APPLICATION

(11) **EP 3 101 606 A1**
(43) Date of publication of application: **07.12.2016**
(21) Application number: 16172504.9
(22) Date of filing: 01.06.2016
(51) Int. Cl.: G06Q 20/20, G07F 7/08

(54) **A STATIONARY DEVICE FOR PRINTING AND PROCESSING PAYMENT TRANSACTIONS AND A SALES SYSTEM**

(30) Priority: 02.06.2015 PL 41254715
(71) Applicant: iPOS S.A., 05-080 Izabelin (PL)
(72) Inventor: Kucharzewski, Jacek, 01-641 Warszawa (PL); Tomaszewski, Adam, 05-083 Wiktorów (PL)
(74) Representative: Sielewiesiuk, Jakub

(57) **Abstract**

The object of the invention is a stationary device for printing and processing payment transactions provided with:
∘ a fiscal printer module connected electronically and integrated within one housing with the means of communication intended to handle the communication with computer networks and peripherals, and furthermore having a display for showing the customer the recorded amount of sales, as well as an opening meant as an outlet of paper from the printer;
∘ a card payment processing module having a screen, preferably a touch-screen, and buttons meant for communication between the user and the device;
characterised in that it generally consists of two parts, meaning a fiscal printer module (1) and a card payment processing module (2), communicationally connected to each other, each of these modules having its own housing.

## Description

The object of the invention is a stationary electronic device for printing and processing payment transactions, dedicated to handling retail sales, combining the features of a fiscal device and a payment terminal, a so-called fiscal terminal. The invention is also related to a sales system comprising such a device.

From the state of the art, there are known electronic devices which are capable of printing, dedicated to handling retail sales and able to fulfil the requirements of taxation. At the same time, there are known electronic devices which process payment transactions, capable of fulfilling the requirements of payment organisations and safety standards.

The safety standards and regulatory requirements imposed on fiscal devices and devices processing payment transactions prohibit:
- any interference with the construction of these devices approved for use,
- sharing resources, in particular the printing element must at all times remain under the control of the fiscal device.

Such status results in coexistence of devices as:
- devices independently recording retail sales and at the same time printing the required fiscal receipts, along with separate devices independently processing payment transactions and at the same time printing the required payment receipts,
- devices constituting an element of a retail sales system, consisting of a computer provided with a specialised application for recording retail sales, connected by cables to the remaining peripheral devices, including a receipt printer and a payment terminal lacking the printing function.

The first case is associated with complete isolation of devices and functions which they serve in the retail sales, accompanied by technical redundancy (both devices are similar in terms of construction - each has a processor, memory, a display, a keyboard and a printer).

Although the second case does integrate the functions of the devices in a retail sales process, by doing so introducing additional functionalities, this results in the necessity to introduce one more device (a computer), which increases the extent of complication and technical redundancy even more (both the computer as well as the device processing payment transactions have a processor, memory, a display and a keyboard).

Two inventions representing attempts at fulfilling the necessary requirements can be distinguished among the existing solutions.

EP 1205895 A2 describes a solution in which one device serves the functions of a cash register, a payment terminal and enables printing receipts - this is realised by placing the respective modules in one shared housing. Such a solution results in limited mobility of the device, due to which its operation may be cumbersome.

EP 605630 B1 describes a portable terminal which enables conducting a card transaction, which however has only one display and is meant to be operated by holding in hands. Because of the integration of numerous functions in one device, its weight is increased, due to which the use of the device may become very cumbersome and the terminal which is intended to be portable presents no construction features which would ensure comfortable operation by the user, in the case of using it e.g. at a counter.

So far, there has been no technical solution in the market having the features of a fiscal device which would at the same time enable processing card transactions, with optimal modular structure and mass, with which it would be possible to place a cash register module on a counter in a point of sale (e.g. of a small newsstand), while the terminal module could be comfortably operated in the hands of a seller or a customer, which modules would constantly communicate with each other.

The purpose of the present invention is to develop a device which would enable handling retail sales and printing the required receipts in accordance with fiscal requirements, and would enable processing card transactions in accordance with safety standards and the requirements of payment organisations, and also allow realisation of additional functionalities associated with connecting the device to a computer network and integration with external service providers. At the same time, the device would lack any abovementioned inconveniences encountered in the devices so far.

According to the invention, a stationary device for printing and processing payment transactions provided with:
o a fiscal printer module connected electronically and integrated within one housing with means of communication intended to handle the communication with computer networks and peripherals, and furthermore having a display for showing the customer the recorded amount of sales, as well as an opening meant as an outlet of paper from the printer;
o a card payment processing module having a screen, preferably a touch-screen, and buttons meant for communication between the user and the device;
is characterised in that it generally consist of two parts, meaning a fiscal printer module and a card payment processing module, communicationally connected to each other, each of these modules having its own housing.

Preferably, the card payment processing module is placed on the printer module and is directed towards the user.

Preferably, the card payment processing module is communicationally connected to the printer module in a manner which enables adequate mobility of the card payment processing module, using means of communication such as an electrical cable, or wirelessly, using data transmission systems, especially the Bluetooth or WiFi standard.

Preferably, the opening meant as an outlet of paper from the printer extends along the lower edge of the printer module and is placed so that during use it is directed towards the seller.

Preferably, the printer module is provided with a thermal printing mechanism.

Preferably, the printer module is provided with a paper feeder, in particular a paper feeder on a roll.

Preferably, the printer module is permanently integrated with the means of communication.

Preferably, it is provided with an additional display, placed on the housing of the printer module, so that during use it is directed towards the customer.

Preferably, the means of communication comprise at least one network interface selected from a group comprising: an Ethernet cable connection, a mobile network interface and the GPRS.

Preferably, the card payment processing module has a multitasking operating system working in real time and provided with a graphical user interface.

Preferably, it is provided with an accumulator or battery-type internal power supply.

Preferably, the card payment processing module constitutes a payment terminal, in particular a terminal for payments using a contactless card, a smart card or a magnetic stripe card.

Additionally, the invention refers to a sales system comprising a stationary device for printing and processing payment transactions.

The present invention will be presented in more detail in an embodiment with reference to the attached drawings, in which:
Fig. 1 - presents a general top view of the device according to the invention faced from the side, with visible place of a cable connection between the printer module and the card transaction processing module
Fig. 2 - presents a general top view of the device according to the invention faced from the side, with invisible place of a cable connection between the modules of the device
Fig. 3 - presents a general view of the device faced from the back, with visible additional display
Fig. 4 - presents a general view of the device faced from the back, with visible additional display and the place of a cable connection between the modules
Fig. 5 - presents a general bottom view of the device, showing the connections for communication with other devices

References present in the drawings:
1. the printer module;
2. the card transaction processing module
3. the touch-screen
4. the additional display
5. the opening meant as an outlet of paper from the printer
6. the connections

### A preferable embodiment

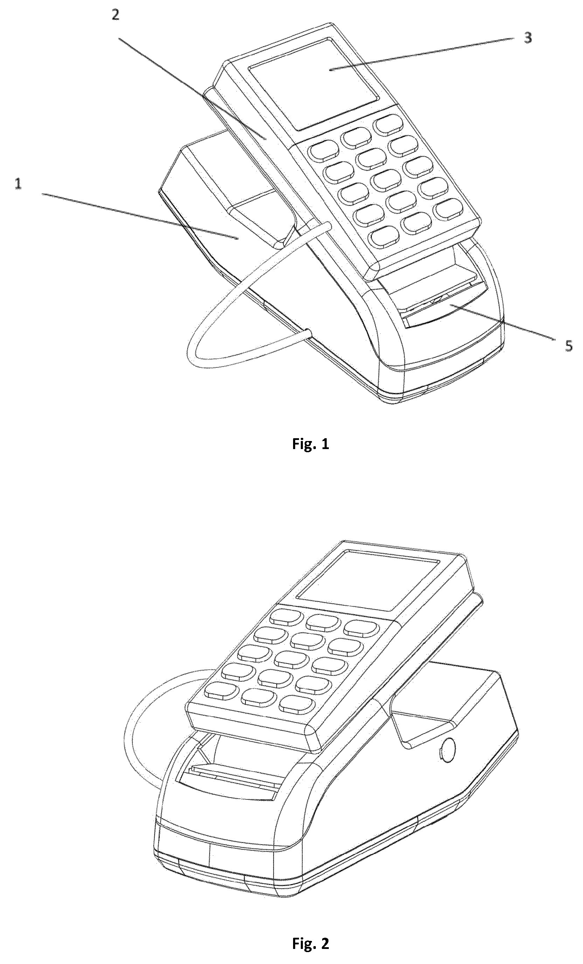

A fiscal terminal, meaning a stationary electronic device for printing and processing card payments according to the invention, presented in Fig. 1 and Fig. 2 in a general side view, generally consists of two parts - a card payment processing module 2 and a printing module (printer module) 1, which modules are communicationally connected to each other via a cable or wirelessly, using data transmission systems (e.g. Bluetooth, WiFi etc.).

The card payment processing module 2 preferably comprises a touch-screen 3 and a set of buttons - they are used to handle payment transactions and enable the handling of additional functions, possible due to the connection with computer networks and peripheral devices. It is also provided with proper electronic means, which enable reading the data stored in payment cards, necessary to conduct the transactions.

Preferably, the card payment processing module 2 is situated on the printer module 1 and connected to it via an electrical cable which enables data transfer and power supply, due to which the card payment processing module 2 can be removed from the printer module 1 and directed towards the customer in order to comfortably handle the transaction.

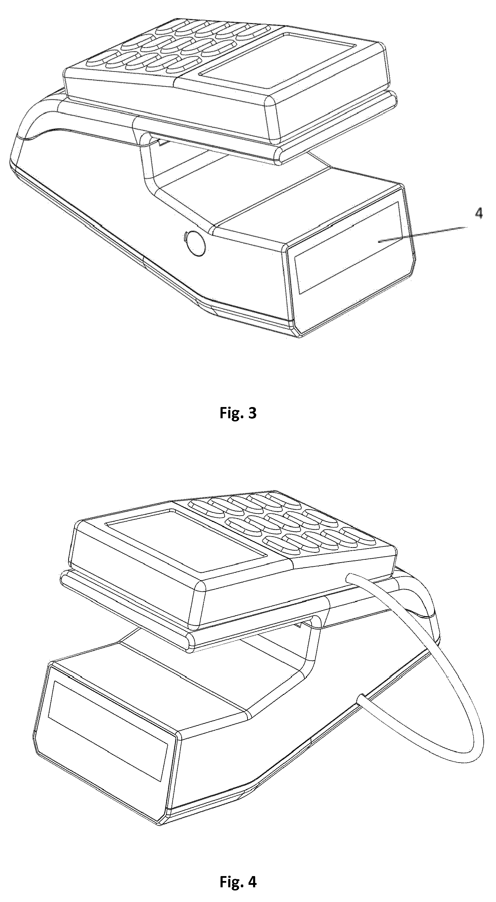

The printer module 1 preferably comprises a thermal printing mechanism contained inside the housing along with a paper feeder, preferably a feeder on a roll. Furthermore, a second display 4 is encased in it, as shown in Fig. 3 and 4, preferably placed in the back part of the housing, which during operation is directed towards the customer and is capable of displaying the amount charged for the purchased commodities or for services rendered.

At the front of the printer module 1, from the operator's side, there is preferably an opening meant as an outlet of paper from the printer 5, due to which the printed confirmations and receipts are easily accessible for the user.

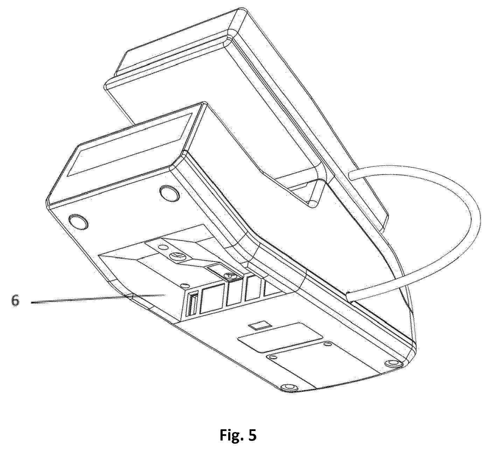

In the lower part of the printer module 1 there are preferably connections, as presented in Fig. 5, enabling communication with other devices, such as e.g. a cash drawer, a barcode scanner, a scale.

Inside the housing of the printer module 1 there are also placed the means of a battery or accumulator power supply, which ensure the ability of the device's operation in the case of the lack of an external power supply, along with a GPRS communication module enabling wireless communication between the device and the network.

## Claims

1. A stationary device for printing and processing payment transactions provided with:
o a fiscal printer module connected electronically and integrated within one housing with the means of communication intended to handle the communication with computer networks and peripherals, and furthermore having a display for showing the customer the recorded amount of sales, as well as an opening meant as an outlet of paper from the printer;
o a card payment processing module having a screen, preferably a touch-screen, and buttons meant for communication between the user and the device;
**characterised in that** it generally consists of two parts, meaning a fiscal printer module (1) and a card payment processing module (2), communicationally connected to each other, each of these modules having its own housing.

2. The device according to claim 1 **characterised in that** the card payment processing module (2) is placed on the printer module (1) and is directed towards the user.

3. The device according to claim 1 or 2 **characterised in that** the card payment processing module (2) is communicationally connected to the printer module (1) in a manner which enables adequate mobility of the card payment processing module (2), using means of communication such as an electrical cable, or wirelessly, using data transmission systems, especially the Bluetooth or WiFi standard.

4. The device according to claim 1, 2 or 3 **characterised in that** the opening (5) meant as an outlet of paper from the printer extends along the lower edge of the printer module (1) and is placed so that during use it is directed towards the seller.

5. The device according to claim 1, 2, 3 or 4 **characterised in that** the printer module (1) is provided with a thermal printing mechanism.

6. The device according to any of the preceding claims from 1 to 5 **characterised in that** the printer module (1) is provided with a paper feeder, in particular a paper feeder on a roll.

7. The device according to any of the preceding claims from 1 to 6 **characterised in that** the printer module (1) is permanently integrated with the means of communication.

8. The device according to any of the preceding claims from 1 to 7 **characterised in that** it is provided with an additional display (4), placed on the housing of the printer module (1) so that during use it is directed towards the customer.

9. The device according to any of the preceding claims from 1 to 8 **characterised in that** the means of communication comprise at least one network interface selected from a group comprising: an Ethernet cable connection, a mobile network interface and the GPRS.

10. The device according to any of the preceding claims from 1 to 9 **characterised in that** the card payment processing module (2) has a multitasking operating system working in real time and provided with a graphical user interface.

11. The device according to any of the preceding claims from 1 to 10 **characterised in that** it is provided with an accumulator or battery-type internal power supply.

12. The device according to any of the preceding claims from 1 to 11 **characterised in that** the card payment processing module (2) constitutes a payment terminal, in particular a terminal for payments using a contactless card, a smart card or a magnetic stripe card.

13. A sales system comprising a stationary device for printing and processing payment transactions according to any of the preceding claims from 1 to 12.
